(19) Europäisches Patentamt
European Patent Office
Office européen des brevets

(11) **EP 3 951 431 A1**

(12) **EUROPEAN PATENT APPLICATION**
published in accordance with Art. 153(4) EPC

(43) Date of publication:
**09.02.2022 Bulletin 2022/06**

(21) Application number: **20777936.4**

(22) Date of filing: **26.02.2020**

(51) International Patent Classification (IPC):
***G01S 15/96*** (2006.01)

(52) Cooperative Patent Classification (CPC):
**G01S 15/96**

(86) International application number:
**PCT/JP2020/007590**

(87) International publication number:
**WO 2020/195467 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2019 JP 2019058147**

(71) Applicant: **FURUNO ELECTRIC CO., LTD.**
**Nishinomiya-City**
**Hyogo 662-8580 (JP)**

(72) Inventor: **ITO, Masanori**
**Nishinomiya-City, Hyogo 6628580 (JP)**

(74) Representative: **CSY London**
**10 Fetter Lane**
**London EC4A 1BR (GB)**

(54) **TARGET MEASUREMENT DEVICE AND TARGET MEASUREMENT METHOD**

(57) A target object measuring device and a target object measuring method, capable of estimating a size and/or a weight of a target object more accurately are provided. A target object measuring device 1 includes a transducer 10 configured to transmit a transmission wave underwater and receive a reflection wave of the transmission wave, a target object echo signal extracting module 32 configured to extract an echo signal of a target object from a reception signal of the reflection wave, a peak detecting module 33 configured to detect a plurality of peaks included in the echo signal, an intensity difference calculating module 35 configured to calculate an intensity difference between an intensity of a first peak and an intensity of a second peak different from the first peak, among the plurality of peaks, and a target object measuring module 37 configured to acquire data related to a size and/or a weight of the target object based on the intensity difference.

FIG. 2

**Description**

TECHNICAL FIELD

The present disclosure relates to a target object measuring device and a target object measuring method, capable of transmitting a transmission wave underwater and measuring a target object based on a reflection wave.

BACKGROUND ART

Conventionally, a target object measuring device which transmits a transmission wave underwater and measures a target object based on a reflection wave is known. For example, a length of fish in a fish cage is measured using a sound wave. The sound wave is transmitted underwater from a transducer. A reflection wave of the sound wave is received by the transducer, and a target strength of the fish is measured based on a reception signal. A size of the fish is estimated based on a relational expression between the target strength and the fish length. Patent Document 1 discloses this kind of target object measuring device.

[Reference Document of Conventional Art]

[Patent Document]

Patent Document 1: US2006-0018197A1

DESCRIPTION OF THE DISCLOSURE

[Problem to be Solved by the Disclosure]

The size of fish may vary largely not only according to its length but also according to a body fatness. Even if fish have the same length, their sizes and weights are greatly different from each other according to the body fatness. For this reason, as described above, when the size of fish is estimated based on the expression between the target strength and the fish length, error may be included in the estimation result.

The present disclosure is made in view of the situation, and one purpose thereof is to provide a target object measuring device and a target object measuring method, capable of estimating the size and/or the weight of a target object more accurately.

[Summary of the Disclosure]

The first aspect of the present disclosure relates to a target object measuring device. The target object measuring device according to this aspect incudes a transducer that transmits a transmission wave underwater and receives a reflection wave of the transmission wave, a target object echo signal extracting module that extracts an echo signal of a target object from a reception signal of the reflection wave, a peak detecting module that detects a plurality of peaks included in the echo signal, an intensity difference calculating module that calculates an intensity difference between an intensity of a first peak and an intensity of a second peak different from the first peak, among the plurality of peaks, and a target object measuring module that acquires data related to a size and/or a weight of the target object based on the intensity difference.

Here, the intensity difference calculating module may identify a highest peak with the highest intensity among the plurality of peaks included in the echo signal, and calculate the intensity difference with the highest peak as the first peak.

The target object measuring device may further include a time difference calculating module configured to calculate a time difference between timings at which the first peak and the second peak appear, and the target object measuring module may acquire the data related to the size and/or the weight of the target object based on the time difference.

The second aspect of the present disclosure relates to a method of measuring a target object. The target object measuring method according to this aspect incudes transmitting a transmission wave underwater, receiving a reflection wave of the transmission wave, extracting an echo signal of the target object from a reception signal of the reflection wave, detecting a plurality of peaks included in the echo signal, calculating an intensity difference between an intensity of a first peak and an intensity of a second peak different from the first peak, among the plurality of peaks, and acquiring data related to a size and/or a weight of the target object based on the intensity difference.

According to these aspects, the data related to the size and/or the weight of the target object is acquired based on the intensity difference between the first peak and the second peak. As described in one embodiment later, the intensity difference depends on a ratio of a body width to a length of the target object. That is, the intensity difference may serve as an index indicative of a body fatness of the target object. Therefore, according to these aspects, the size and/or the weight of the target object can be estimated more accurately.

[Effect of the Disclosure]

As described above, according to the present disclosure, a target object measuring device and a target object measuring method, capable of estimating the size and/or the weight of a target object more accurately can be provided.

The effects and purpose of the present disclosure will be clear from the following description of the embodiment. However, the embodiment described below is merely an example of implementing the present disclosure, and the present disclosure is not limited to the embodiment described below.

BRIEF DESCRIPTION OF DRAWINGS

Fig. 1 is a perspective view illustrating a use of a target object measuring device according to one embodiment.

Fig. 2 is a block diagram illustrating a configuration of the target object measuring device 1 according to this embodiment.

Fig. 3 is a view illustrating one example of an echo signal according to this embodiment.

Fig. 4(a) is a view schematically illustrating a state of a reflection wave when a transmission wave is reflected on a swim bladder of fish according to this embodiment.

Fig. 4(b) is a view schematically illustrating a state of the reflection wave when the transmission wave is reflected on a back of the fish according to this embodiment.

Fig. 4(c) is a view schematically illustrating a state of the reflection wave when the transmission wave is reflected on a belly of the fish according to this embodiment.

Fig. 4(d) is a view illustrating parameters used for a calculation of a body width of the fish according to this embodiment.

Fig. 5 is a view illustrating one example of a two-dimensional histogram having two axes comprised of an intensity difference and a time difference according to this embodiment.

Fig. 6 is a view illustrating one example of the two-dimensional histogram having the two axes comprised of the intensity difference and the time difference according to this embodiment.

Fig. 7 is a view illustrating one example of the two-dimensional histogram having the two axes comprised of the intensity difference and the time difference according to this embodiment.

Fig. 8 is a view illustrating one example of the two-dimensional histogram having the two axes comprised of the intensity difference and the time difference according to this embodiment.

Fig. 9 is a flowchart illustrating processing of the target object measuring device according to this embodiment.

Fig. 10(a) is a graph illustrating a change in a relative position acquired at each measurement date according to one verification example of this embodiment.

Fig. 10(b) is a graph illustrating a change in a relative level acquired at each measurement date according to the verification example of this embodiment.

Fig. 10(c) is a graph illustrating a number of second peaks based on the reflection wave of the back acquired at each measurement date according to the verification example of this embodiment.

MODE FOR CARRYING OUT THE DISCLOSURE

Hereinafter, one embodiment of the present disclosure is described with reference to the drawings. In the following embodiment, one example in which the present disclosure is applied to a target object measuring device installed in a fish cage is illustrated. However, the present disclosure is not intended to be limited to the following embodiment.

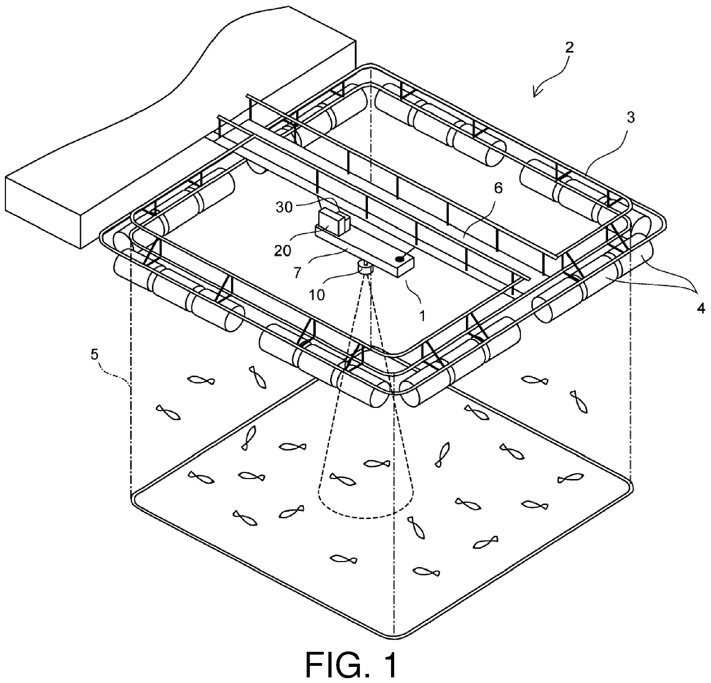

Fig. 1 is a perspective view illustrating a use of a target object measuring device 1.

As illustrated in Fig. 1, in this embodiment, the target object measuring device 1 is used in a fish cage 2 installed in the sea for culturing fish which is a kind of aquatic organism. The fish cage 2 includes a frame 3, floats 4, a net 5, and a pier 6.

The frame 3 is formed in a loop shape in a plan view. The plurality of floats 4 are attached to the frame 3. The frame 3 floats on the water surface by the buoyancy of the floats 4. The frame 3 is connected to weights at the sea bed via mooring ropes (not illustrated).

An upper end of the net 5 is fixed to the frame 3. The net 5 is suspended from the frame 3 so as to partition water to form a closed space. Fish are bred inside the closed space. The pier 6 for performing various works in the culture is fixed onto the frame 3.

A float 7 floats substantially in a center part of the inside of the frame 3. The float 7 is tied to the pier 6 by a rope. The target object measuring device 1 is disposed at the float 7.

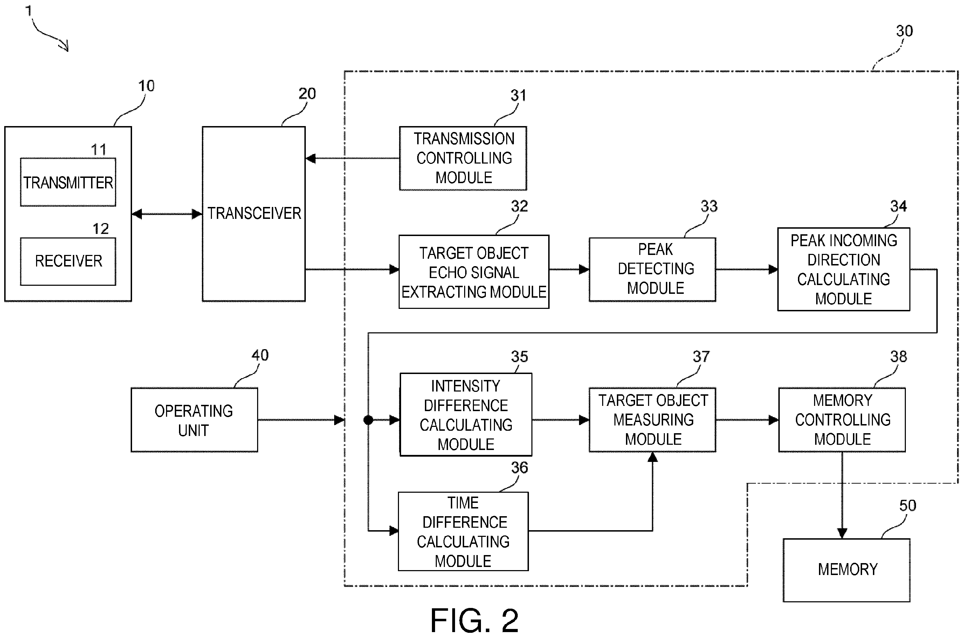

Fig. 2 is a block diagram illustrating a configuration of the target object measuring device 1.

The target object measuring device 1 includes a transducer 10, a transceiver 20, a signal processing unit 30, and an operating unit 40. Note that the transducer 10, the transceiver 20, and the signal processing unit 30 are illustrated in Fig. 1, and the operating unit 40 is omitted. The operating unit 40 is used for an operation input to the target object measuring device 1. Electric power is supplied to each part of Fig. 2 from a power supply (not illustrated). The power supply is provided with, for example, a rechargeable battery, such as a lithium ion battery, which can be charged.

The transducer 10 is provided with an element which can convert an electric signal into an ultrasonic vibration, and vice versa. The transducer 10 detects underwater by using a transmission wave which is an ultrasonic wave. As illustrated in Fig. 1, the transducer 10 is attached to the center of a lower surface of the float 7. The transducer 10 is arranged vertically downward, and transmits the ultrasonic wave (transmission wave) downwardly underwater from near the water surface.

The transducer 10 is comprised of a transmitter 11 and a receiver 12. The receiver 12 has a plurality of elements divided into four reception channels. The transmitter 11 transmits a pulse-shaped transmission wave underwater. In order to improve resolution in the depth direction, it is preferred to transmit the transmission wave with the pulse as short as possible. Each reception channel of the receiver 12 receives a reflection wave which is reflected on an underwater target object. The transducer 10 sends the electric signal based on the received reflection wave to the transceiver 20.

Here, the transducer 10 acquires a position of the target object based on a difference between reception timings of the reflection wave by the four reception channels (i.e., a phase difference of the received reflection wave). Therefore, a three-dimensional detection by the known split beam method can be achieved. Note that the structure of the transducer 10 may be changed suitably. For example, the transducer 10 may be configured so that the elements of the receiver 12 perform both transmission and reception.

The transceiver 20 is connected to the transducer 10 via an electrical cable. The transceiver 20 outputs an electric signal to the transducer 10 via the electrical cable for causing the transducer 10 to transmit the transmission wave. Further, the transceiver 20 acquires, via the electrical cable, an electric signal which is acquired by the transducer 10 based on the reflection wave. Then, the transceiver 20 converts the electric signal acquired from the transducer 10 into a reception signal which is a digital signal, and transmits it to the signal processing unit 30. Here, the transceiver 20 converts the electric signals acquired by the four reception channels into the reception signals, respectively, and transmits them to the signal processing unit 30.

The signal processing unit 30 is configured as a known computer. The signal processing unit 30 is connected to the transceiver 20 via a telecommunication cable. The signal processing unit 30 communicates with the transceiver 20 via the telecommunication cable. The signal processing unit 30 acquires the reception signal from the transceiver 20 by the communication described above. The signal processing unit 30 performs processing of the acquired reception signal for a target object measurement.

The signal processing unit 30 includes a transmission controlling module 31, a target object echo signal extracting module 32, a peak detecting module 33, a peak incoming direction calculating module 34, an intensity difference calculating module 35, a time difference calculating module 36, a target object measuring module 37, and a memory controlling module 38.

The signal processing unit 30 is provided with a calculation processing circuit, such as a CPU (Central Processing Unit), and a storage medium, such as a ROM (Read Only Memory), a RAM (Random Access Memory), and/or a hard disk drive. The storage medium stores a program for realizing processing for the target object measurement. The signal processing unit 30 performs a function of each part illustrated in Fig. 2 by using the program. That is, functional blocks which is executed by the signal processing unit 30 based on the program are illustrated in Fig. 2.

The transmission controlling module 31 performs via the transceiver 20 a control for causing the transmitter 11 to output the transmission wave. The target object echo signal extracting module 32 extracts an echo signal based on the reflection wave from fish, from the reception signal acquired from the transceiver 20. In detail, the target object echo signal extracting module 32 adds the reception signals based on the reflection wave received by the four reception channels of the receiver 12 to generate an addition signal, and carries out an envelope detection of the generated addition signal to generate the echo signal. Then, the target object echo signal extracting module 32 extracts the echo signal above a given threshold as the echo signal based on the reflection wave from the fish.

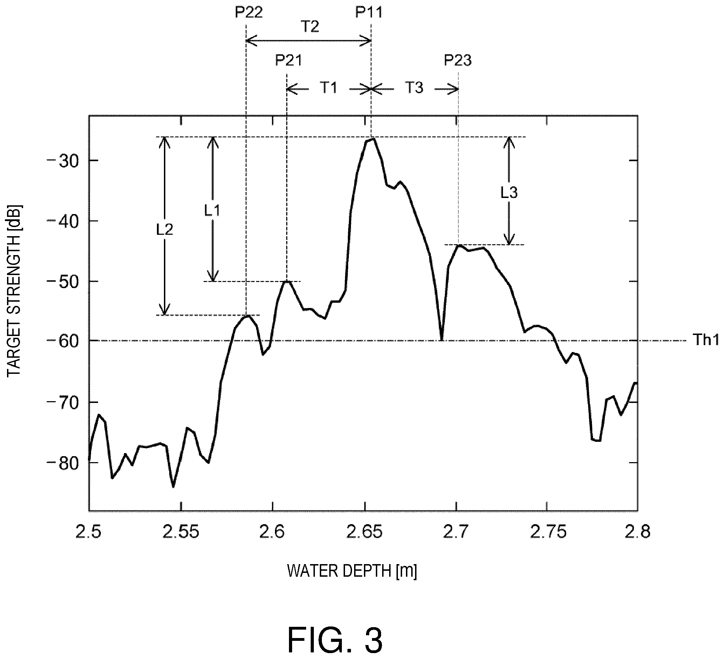

Fig. 3 is a view illustrating one example of the echo signal. Note that, in Fig. 3, the horizontal axis is illustrated as being converted into a water depth so that a reflected position of a waveform can be easily grasped. Here, the water depth is acquired by multiplying a time from a transmission of the transmission wave to a reception of the reflection wave by an underwater speed of sound, and dividing the obtained value by two. Further, a target strength based on the echo signal is set to the vertical axis of Fig. 3. The target strength is a parameter indicative of a rate of the reflection wave partially returning in the incidence direction after the ultrasonic wave (transmission wave) hits the target object and scatters, and is substantially equivalent to an intensity of the echo signal. The target strength is expressed as a decibel value.

Returning to Fig. 2, the target object echo signal extracting module 32 extracts, as the echo signal of fish, the echo signal of which the target strength value is above a given threshold Th1 illustrated in Fig. 3. Note that, in order to exclude the reflection wave from the net 5 etc., the echo signal within a range with the time from the transmission to the reception being too long is excluded from the candidate of the extraction of the fish echo signal. For example, a range of the water depth being 1 to 4m is set as the extraction range of the echo signal of fish. The target object echo signal extracting module 32 outputs, to the peak detecting module 33, the echo signal based on the reflection wave from fish.

The peak detecting module 33 detects, from the echo signal of fish extracted by the target object echo signal extracting module 32, a peak included in the echo signal. Generally, in the echo signal from a single fish, a curve indicative of time transition of signal level has a complicated shape where local maximums and local minimums appear alternately, for example, as illustrated in Fig. 3. The peak detecting module 33 detects each of the plurality of peaks included in the echo signal of the fish. The peak detecting module 33 outputs data related to each of the detected peaks to the peak incoming direction calculating module 34.

The peak incoming direction calculating module 34 calculates an incoming direction of each of the plurality of peaks detected by the peak detecting module 33 based on a difference of timing at which each reception channel receives the reflection wave (a phase difference). The calculation of the incoming direction is performed by the split beam method described above. The peak incoming direction calculating module 34 outputs the calculated incoming direction of each peak to the intensity difference calculating module 35 and the time difference calculating module 36.

The intensity difference calculating module 35 and the time difference calculating module 36 extract peaks caused by the same fish based on the incoming direction of each peak inputted from the peak incoming direction calculating module 34. Here, the extraction of the peaks is performed by the following method.

Generally, it is known that the transmission wave (ultrasonic wave) transmitted from the transducer 10 reflects most strongly at a swim bladder among parts of fish (e.g., back and belly). Therefore, in Fig. 3, it may be assumed that a peak P11 with the highest signal intensity among a plurality of peaks P11 and P21-P23 included in the echo signal of fish is originated in the reflection wave reflected on the swim bladder. Here, the peak P11 is set as a first peak P1.

Among other peaks which appear at timings near the first peak P1 (i.e., the remaining peaks included in the echo signal of the fish), peaks of which the incoming directions are substantially the same as the first peak P1 may be assumed to be obtained from parts such as the back and the belly of the same fish as the fish from which the first peak P1 is obtained. That is, when a difference between the incoming direction of the first peak P1 and the incoming directions of other peaks are smaller than a given threshold, other peaks may be assumed to be obtained from the parts such as the back and the belly of the same fish as the fish from which the first peak P1 is obtained.

Based on the assumption described above, the intensity difference calculating module 35 and the time difference calculating module 36 extract, as second peaks P2, other peaks in the incoming direction having a difference from the first peak P1 smaller than the given threshold, based on the incoming direction of the peaks inputted from the peak incoming direction calculating module 34. The intensity difference calculating module 35 and the time difference calculating module 36 use the first peak P1 and the second peak P2 which are thus extracted as the peaks originating from the same fish for calculating an intensity difference and a time difference.

In the example of Fig. 3, when the differences between the incoming directions of the peaks P21-P23 and the incoming direction of the first peak P1 are smaller than the given threshold, the peaks P21-P23 are extracted as the second peaks P2. In this case, since the peaks P21 and P22 are closer than the peak P11 (the reception timings are earlier), they are assumed to be the peaks based on the reflection waves from a dorsal fin, the back, etc. of the fish. Further, since the peak P23 is farther than the peak P11 (the reception timing is later), it is assumed to be the peak based on the reflection wave from the belly etc. of the fish.

The intensity difference calculating module 35 calculates the intensity difference between the first peak P1 and the second peak P2 which are extracted by the method described above, and transmits the calculated intensity difference to the target object measuring module 37. For example, in the example of Fig. 3, the intensity difference calculating module 35 calculates an intensity difference L1 between the peak P11 (first peak PI) and the peak P21 (second peak P2), an intensity difference L2 between the peak P11 (first peak PI) and the peak P22 (second peak P2), and an intensity difference L3 between the peak P11 (first peak PI) and the peak P23 (second peak P2), and transmits the calculated intensity differences L1-L3 to the target object measuring module 37.

The time difference calculating module 36 calculates the time difference between the first peak P1 and the second peak P2 which are extracted by the method described above, and transmits the calculated time difference to the target object measuring module 37. For example, in the example of Fig. 3, the time difference calculating module 36 calculates a time difference T1 between the peak P11 (first peak PI) and the peak P21 (second peak P2), a time difference T2 between the peak P11 (first peak PI) and the peak P22 (second peak P2), and a time difference T3 between the peak P11 (first peak PI) and the peak P23 (second peak P2), and transmits the calculated time differences T1-T3 to the target object measuring module 37.

The target object measuring module 37 acquires data related to a size and/or a weight of the fish based on the intensity difference between the first peak P1 and the second peak P2 which are inputted from the intensity difference calculating module 35, and the time difference between the first peak P1 and the second peak P2 which are inputted from the time difference calculating module 36. In detail, the target object measuring module 37 acquires data related to a height of the fish based on the time difference, and then acquires data related to the fish weight based on the data related to the acquired height and the intensity difference. Below, a method of acquiring the data is described.

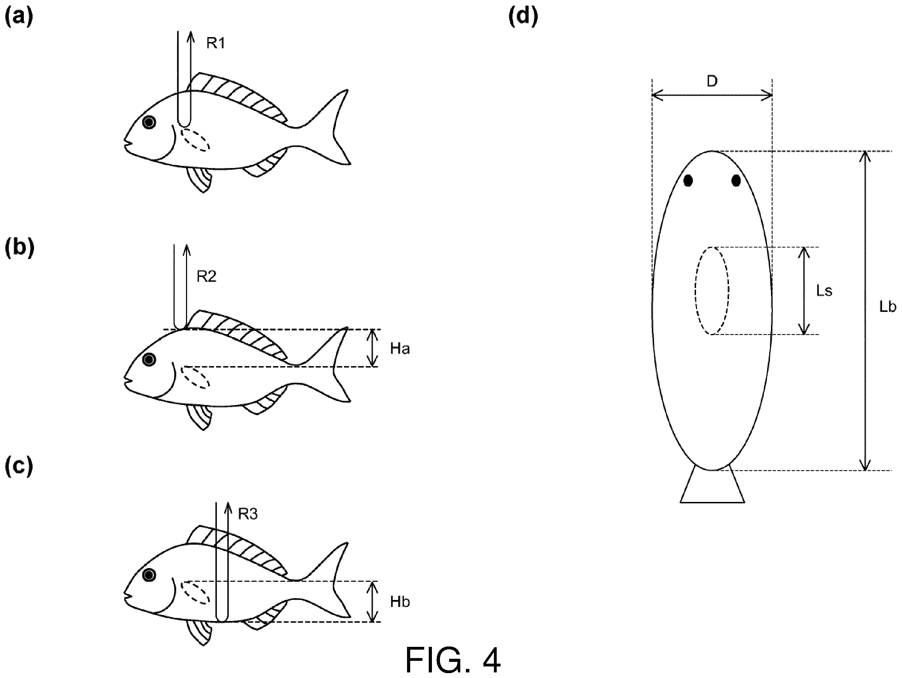

Figs. 4(a) to 4(c) are views illustrating a relation between the time difference between the first peak P1 and the second peak P2, and the height of fish.

Fig. 4(a) illustrates a state of a reflection wave R1 when the transmission wave (ultrasonic wave) is reflected on the swim bladder of fish, and Figs. 4(b) and (c) illustrate states of reflection waves R2 and R3 when the transmission wave (ultrasonic wave) is reflected on the back and the belly of the fish, respectively. As described above, it is known that the transmission wave (ultrasonic wave) transmitted from the transducer 10 is reflected the strongest on the swim bladder among the parts of fish (each part like the back and the belly). Therefore, the peak of the echo signal based on the reflection wave R1 corresponds to the first peak P1 described above, and the peak of the echo signal based on the reflection waves R2 and R3 correspond to the second peak P2 described above.

Here, the time difference between the first peak P1 and the second peak P2 based on the reflection wave from the back of the fish corresponds to a distance Ha from the swim bladder to the back, as illustrated in Fig. 4(b). That is, the distance Ha can be calculated by multiplying this time difference by the speed of sound inside the fish, and then dividing it by two. Further, the time difference between the first peak P1 and the second peak P2 based on the reflection wave from the belly of the fish corresponds to a distance Hb from the swim bladder to the belly, as illustrated in Fig. 4(c). That is, the distance Hb can be calculated by multiplying this time difference by the speed of sound inside the fish, and then dividing it by two.

Therefore, the height of the fish can be calculated using the time difference between the second peak P2 based on the reflection wave R2 from the back or the reflection wave R3 from the belly, and the first peak P1 based on the reflection wave from the swim bladder. For example, the height of the fish can be calculated by applying the time difference between the second peak P2 based on the reflection wave R2 from the back of the fish and the first peak P1 based on the reflection wave from the swim bladder to a given relational expression (a relational expression in consideration of the speed of sound inside the fish body, and a relation between the distance Ha and the fish height). Here, the second peak P2 based on the reflection wave R2 from the back of the fish corresponds to the second peak P2 which appears the earliest (the peak P22 with the shallowest water depth in Fig. 3) among the peaks of the echo signal above the threshold Th1. Therefore, this time difference between the second peak P2 and the first peak (the time difference T2 in Fig. 3) may be used for the calculation of the fish height.

Note that, if the fish height is H (unit: cm), the weight W (unit: g) of the fish may be expressed by the following expression, for example.

$$W = a \times H^b \qquad ... (1)$$

The following expression is established by taking the logarithm of both sides of Expression (1).

$$\log W = \log a + b \times \log H ... (2)$$

Therefore, coefficients a and b can be calculated by taking the logarithm of both the weight W and the height H to calculate a regression line, based on the intercept and the slope of the regression line. The weight W of the fish can be calculated based on the height H by applying the obtained coefficients a and b to Expression (1) described above.

However, it is thought that the weight W of the fish may be influenced not only by the height H but also by a body width D of the fish. Therefore, Expression (1) described above may be corrected like the following expression by using the body width D (unit: cm).

$$W = a \times H^b \times D^c \qquad ... (3)$$

However, the body width D cannot be directly calculated from the echo signal of the fish.

Therefore, the inventor examined a calculation of the body width D of the fish by using the intensity difference between the first peak P1 and the second peak P2 described above. The second peak P2 may be, for example, the peak of the echo signal based on the reflection wave from the back of the fish (the peak P22 in Fig. 3), as described above.

Fig. 4(d) is a view illustrating parameters used for the calculation of the body width D.

In Fig. 4(d), Lb is a length of fish and Ls is a length of the swim bladder. The swim bladder grows substantially similarly to the growth of the fish. That is, the length Lb is in a proportional relation to the swim bladder length Ls. Therefore, the following expression is established.

$$Ls = k \times Lb \qquad ... (4)$$

The following expression is established by taking the logarithm of both sides of Expression (4).

$$\log Ls = \log Lb + \log k \quad ... (5)$$

Here, since it is thought that the width of the swim bladder is determined by the length of the swim bladder, a reflection intensity of the swim bladder is proportional to the square (area) of the length Ls of the swim bladder. Further, it is thought that the reflection intensity of the fish is proportional to the product (area of the fish) of the length Lb and the body width D. Therefore, if the peak intensity of the reflection wave from the swim bladder is Ts(P1) and the peak intensity of the reflection wave from the back is Ts(P2), the following expressions are established.

$$Ts(P1) = ks \times Ls^2 \qquad ... (6)$$

$$Ts(P2) = kb \times Lb \times D \quad ... (7)$$

The following expressions are established by taking the logarithm of both sides of each of Expressions (6) and (7) and carrying out a decibel conversion.

$$TS(P1) = 20\log Ls + 10\log ks \qquad\qquad ... (8)$$

$$TS(P2) = 10\log Lb + 10\log D + 10\log kb \qquad ... (9)$$

In Expressions (8) and (9), TS(P1) and TS(P2) are substituted by the following expressions, when carrying out the decibel conversion of the left side of Expressions (6) and (7).

$$TS(P1) = 10\log Ts(P1) \quad ... (10)$$

$$TS(P2) = 10\log Ts(P2) \quad ... (11)$$

TS(P1) corresponds to the intensity of the first peak P1 described above (the peak of the echo signal based on the swim bladder), and TS(P2) corresponds to the second peak P2 described above (the peak of the echo signal based on the back).

Here, if a difference between Expressions (10) and (11) is calculated, the following expression is established.

$$TS(P2) - TS(P1) = 10\log Lb + 10\log D - 20\log Ls + TScmb - TScms \qquad ...$$

$$(12)$$

However, TScmb and TScms are expressed by the following expressions.

$$TScmb = 10\log kb \qquad ... (13)$$

$$TScms = 10logks \qquad ... (14)$$

If Expression (5) is applied to Expression (12), the following expression can be obtained.

$$TS(P2) - TS(P1) = -10logLb + 10logD + \alpha = 10log(D/Lb) + \alpha \quad ... (15)$$

Note that the constant $\alpha$ is expressed by the following expression.

$$\alpha = TScmb - TScms - 20logk \qquad ... (16)$$

From Expression (15), the intensity difference between the first peak P1 and the second peak P2 is dependent on the body width D and length Lb of the fish. That is, it is thought that the intensity difference between the first peak P1 and the second peak P2 becomes an index indicative of a body fatness of the fish. By using Expression (15), the body width D of the fish can be calculated from the intensity difference between the first peak P1 and the second peak P2. Thus, the body width D of Expression (3) may be acquired.

Here, suppose that the length Lb in a proportional relation to the height H, Expression (3) can be converted into the following expression.

$$W = a \times H^b \times Lb^c \times (D/Lb)^c \qquad ... (17)$$

Here, when the above Expression (15) is applied to an expression obtained by taking logarithm on both sides of Expression (17) to simplify coefficients and exponents, the following expression is obtained.

$$logW = a' + b'logH + c'\Delta TS \qquad ... (18)$$

Here, $\Delta TS$ is the intensity difference (unit: dB) between the first peak P1 and the second peak P2.

Therefore, the fish weight W can be calculated by the following expression by conducting a multiple regression analysis to calculate coefficients a', b', and c' based on logW, logH, and $\Delta TS$.

$$W = 10^{a'} \times H^{b'} \times 10^{c'\Delta TS} \ ... (19)$$

In Expression (19), $\Delta TS$ is the intensity difference between the first peak P1 and the second peak P2, and the height H can be calculated based on the time difference between the first peak P1 and the second peak P2. Therefore, the fish weight W can be acquired based on the intensity difference calculated by the intensity difference calculating module 35 of Fig. 2 and the time difference calculated by the time difference calculating module 36.

Note that, in this embodiment, processing for acquiring the weight W is not performed for every fish, but processing for acquiring an average weight of fish stored in the fish cage 2 is performed. Note that, instead of or in addition to the processing for acquiring the average weight of fish, processing for acquiring the weight W for every fish may be performed. Below, the processing for acquiring the average weight of fish is described.

The target object measuring module 37 generates a two-dimensional histogram having two axes comprised of the intensity difference and the time difference based on the intensity differences and the time differences which are acquired from many fish. A large number of echo signals obtained by continuously observing the echo signal for a certain period of time (several hours to tens of hours) are used for the generation of the two-dimensional histogram.

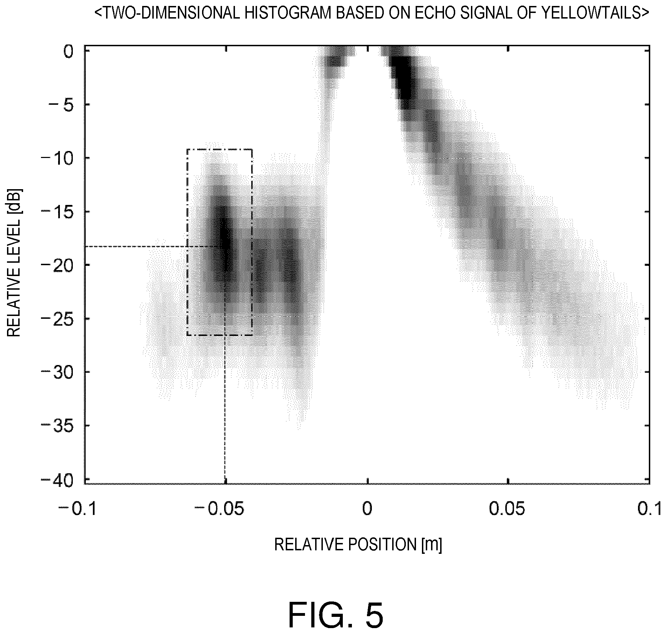

Figs. 5 to 8 are views illustrating examples of the two-dimensional histogram having the two axes comprised of the intensity difference and the time difference. In Figs. 5 to 8, the vertical axis is the intensity difference (relative level) and the horizontal axis is the time difference (relative position). Here, the time difference is converted into a relative position of the water depth where the second peak P2 is acquired with respect to the water depth where the first peak P1 is acquired, and the relative position is defined on the horizontal axis.

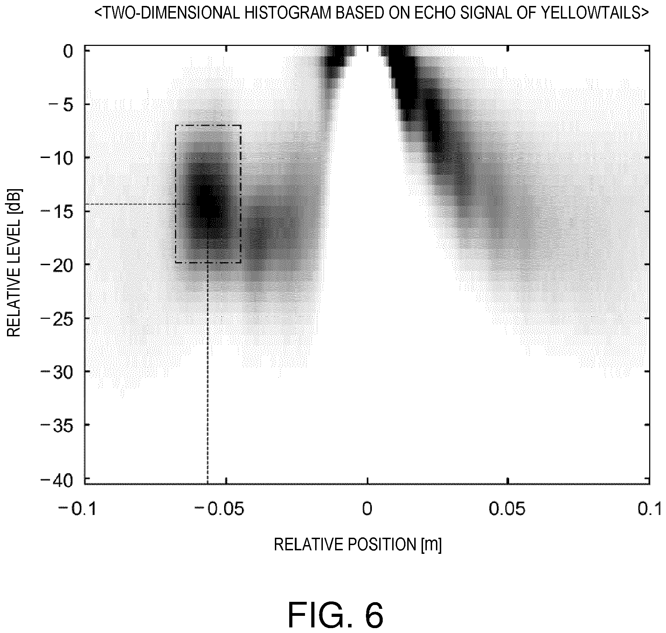

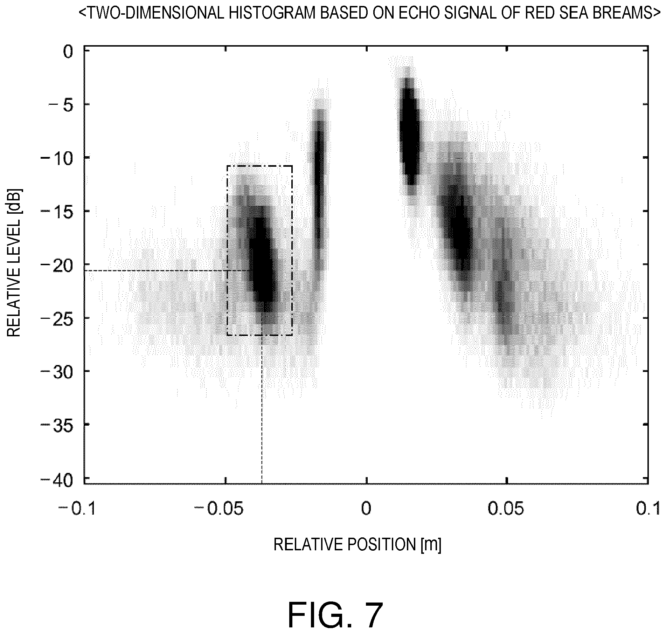

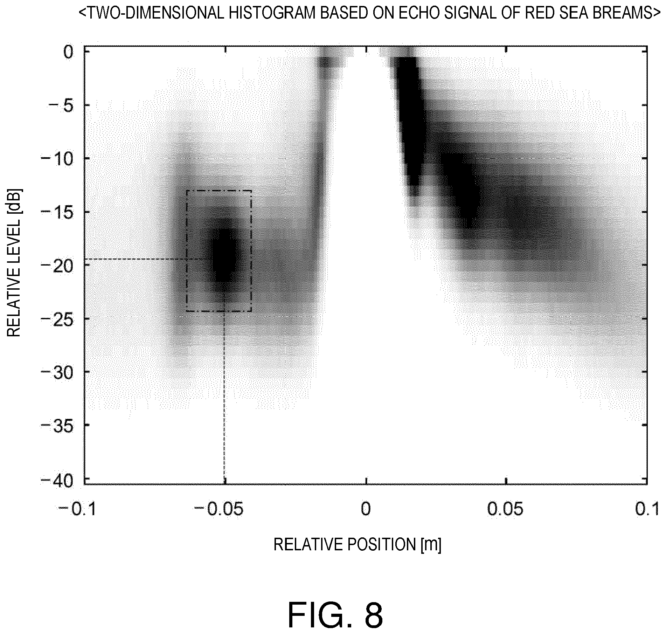

The two-dimensional histograms of Figs. 5 to 8 are generated based on the reception signals acquired by actually installing the target object measuring device 1 provided with the above configuration in the fish cage 2. Figs. 5 and 6 are the two-dimensional histograms obtained from yellowtails, and Figs. 7 and 8 are the two-dimensional histograms obtained from red sea breams. The histogram of Fig. 6 is based on data acquired in a stage where the yellowtail grew up from the stage of the histogram of Fig. 5, and the histogram of Fig. 8 is based on data acquired in a stage where the red sea bream grew up from the stage of the histogram of Fig. 7.

For example, the target object measuring module 37 acquires, from the two-dimensional histogram, representative values of the intensity difference and the time difference between the first peak P1 based on the reflection wave reflected on the swim bladder of the fish and the second peak P2 based on the reflection wave reflected on the back of the fish. In Figs. 5 to 8, a data group of the intensity difference and the time difference between the first peak P1 (swim bladder) and the second peak P2 (back) is included in an area surrounded by a one-dot chain line. The target object measuring module 37 sets an extraction range where the data group exists in the two-dimensional histogram. Here, an area determined beforehand for every fish species is used as the extraction range. The target object measuring module 37 acquires, as the representative values, the intensity difference and the time difference at a position where frequency is concentrated in the extraction range.

For example, the target object measuring module 37 sets a rectangular extraction range in the two-dimensional histogram, and applies processing for a kernel density estimation to the data group included in the extraction range for each of the vertical axis (intensity difference) and the horizontal axis (time difference). Therefore, the target object measuring module 37 acquires a smoothed frequency distribution curve of the data group included in the extraction range for each of the vertical axis (intensity difference) and the horizontal axis (time difference). Then, the target object measuring module 37 acquires the intensity difference and the time difference at which the frequency becomes the maximum in each of the acquired frequency distribution curves, and sets the acquired intensity difference and time difference as the representative values of the intensity difference and the time difference for a school of fish stored in the fish cage 2.

Note that the method of acquiring the representative values is not limited to the above, but other methods may also be used, as long as an average intensity difference and an average time difference are set as the representative values. For example, the target object measuring module 37 may acquire a mode of the intensity difference and the time difference (the intensity difference and the time difference at the highest frequency) from the data included in the extraction range, and set the acquired mode as the representative values of the intensity difference and the time difference for the school of fish stored in the fish cage 2, without applying the kernel density estimation to the extraction range. Alternatively, the target object measuring module 37 may obtain the center of gravity position of the frequency distribution in the extraction range, and set the intensity difference and the time difference corresponding to the center of gravity position as the representative values of the intensity difference and the time difference for the school of fish stored in the fish cage 2. Alternatively, average values, median values, etc. of the intensity difference and the time difference in the extraction range may be set as the representative values of the intensity difference and the time difference for the school of fish stored in the fish cage 2.

In the examples of Figs. 5 and 6 (yellowtails), a value near -18dB and a value near -14dB are acquired respectively as representative values of the intensity difference (relative level), and a value near -0.05m and a value near -0.06m are acquired respectively as representative values of the time difference (relative position). Further, in the examples of Figs. 7 and 8 (red sea bream), a value near -21dB and a value near -19dB are acquired respectively as representative values of the intensity difference (relative level), and a value near -0.03m and a value near -0.05m are acquired respectively as representative values of the time difference (relative position). Each of the representative values changes in association with the growth of the target object (yellowtail, red sea bream).

The target object measuring module 37 applies the acquired representative values of the intensity difference and the time difference to Expression (19) to calculate the average weight W of fish stored in the fish cage 2. Thus, the average weight W of fish is acquired.

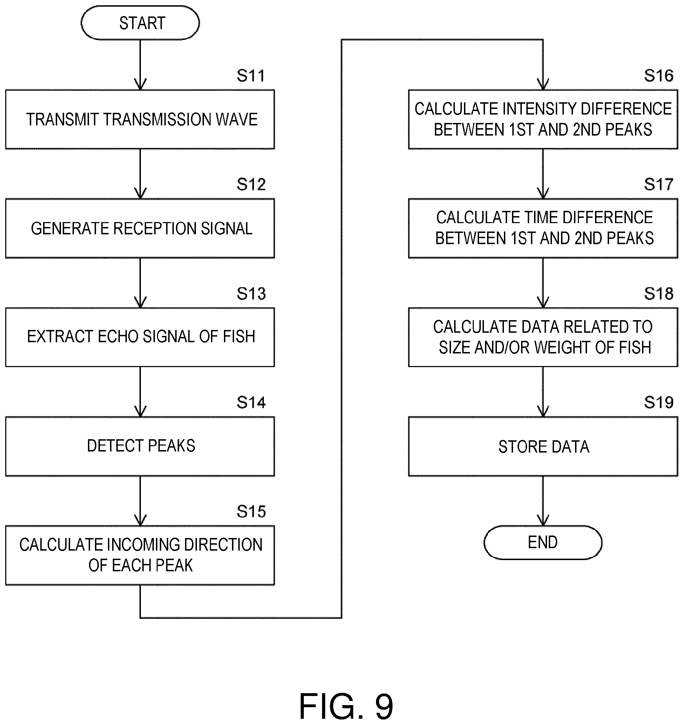

Fig. 9 is a flowchart illustrating processing of the target object measuring device 1.

When the processing is started, the transmission controlling module 31 first causes the transceiver 20 to transmit the transmission wave (S11). Therefore, the pulse-shaped transmission wave is transmitted from the transducer 10 at a given cycle. In response to the transmission, for every cycle, the transceiver 20 generates the reception signals based on received signal inputted from each reception channel of the transducer 10, and transmits the generated reception signals to the target object echo signal extracting module 32 (S12).

The target object echo signal extracting module 32 adds the reception signals of the reception channels to generate the echo signal, and extracts the echo signal within the range above the threshold Th1 as the echo signal of fish (S13). The target object echo signal extracting module 32 transmits the extracted echo signal of fish to the peak detecting module 33. The peak detecting module 33 detects the plurality of peaks included in the echo signal of fish, and transmits the detection result to the peak incoming direction calculating module 34 (S14). The peak incoming direction calculating module 34 calculates the incoming direction of each peak based on the difference between the reception timings (phase difference) of the four reception channels of the transducer 10, and transmits the calculation result to the intensity difference calculating module 35 and the time difference calculating module 36 (S15).

The intensity difference calculating module 35 sets the highest intensity peak among the plurality of peaks detected by the peak detecting module 33 as the first peak P1, and sets the peak of which the difference of the incoming direction from the first peak P1 is smaller than the given threshold as the second peak P2. Then, the intensity difference calculating module 35 calculates the intensity difference between the first peak P1 and the second peak P2, and transmits the calculated intensity difference to the target object measuring module 37 (S16).

The time difference calculating module 36 sets the first peak P1 and the second peak P2 by using the same processing as the intensity difference calculating module 35. Then, the time difference calculating module 36 calculates the time difference between the first peak P1 and the second peak P2, and transmits the calculated time difference to the target object measuring module 37 (S17).

The target object measuring module 37 accumulates the intensity differences and the time differences which are inputted from the intensity difference calculating module 35 and the time difference calculating module 36, and generates the two-dimensional histogram having the two axes comprised of the intensity difference and the time difference as described above according to the accumulated intensity differences and time differences. Then, the target object measuring module 37 acquires the representative values of the intensity difference and the time difference as described above based on the generated two-dimensional histogram, and applies the acquired representative values to Expression (19) to calculate the average weight W of fish stored in the fish cage 2 (S18). The target object measuring module 37 transmits the calculated weight W to the memory controlling module 38.

The memory controlling module 38 stores the received weight W in its own storage medium, and stores the same in an external memory 50 which is detachably attached to the target object measuring device 1 (S19). As described above, the processing of the target object measuring device 1 is finished. A user can refer to the average weight W of fish by removing the external memory 50 from the target object measuring device 1, and attaching it to an external computer etc. Therefore, the user can grasp the growth condition of fish in the fish cage 2.

<Verification Example>

The inventor actually performed the processing of the above embodiment to yellowtails cultured in the fish cage, and measured the average weight of the yellowtails. The measurement of data is carried out four times in 2018 from the end of July to the end of November.
    (1) First time: July 30 and 31, and August 1
    (2) Second time: October 1 and 2
    (3) Third time: October 30 and 31, and November 1
    (4) Fourth time: November 28, 29, and 30

In the measurement at each time, the actual measurement of the weight of the yellowtails is also performed. The actual measurement (average value) is as follows.
    (1) First time: 370g
    (2) Second time: 1,040g
    (3) Third time: 1,290g
    (4) Fourth time: 1,650g

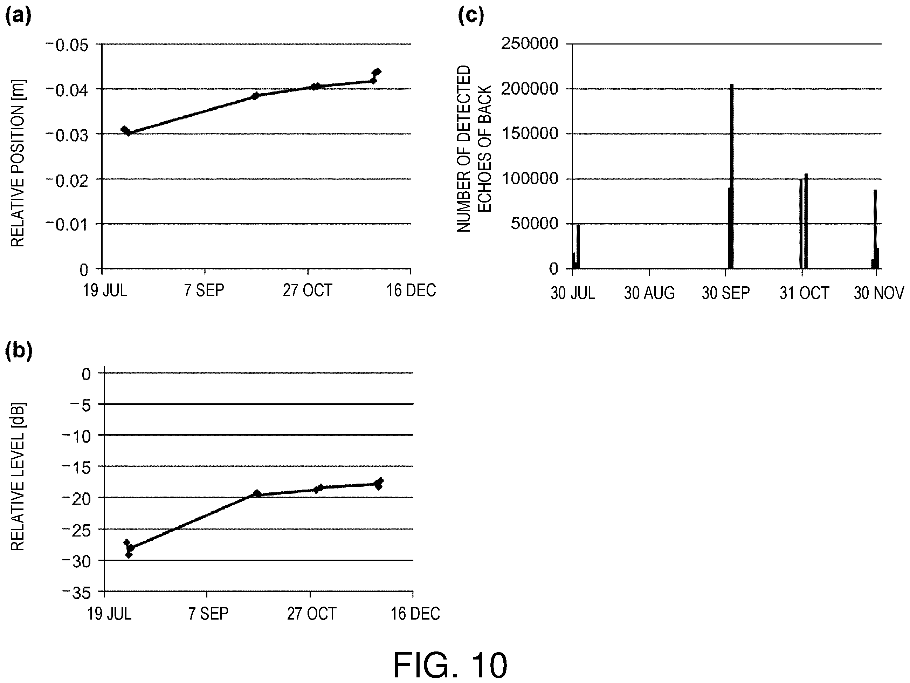

Fig. 10(a) is a graph illustrating a change in the relative position (the time difference between the first peak P1 and the second peak P2 is converted into the difference in the water depths between the two) acquired at each measurement date. Fig. 10(b) is a graph illustrating a change in the relative level (the intensity difference between the first peak P1 and the second peak P2) acquired at each measurement date. Here, the peak based on the reflection wave from the back of the fish (yellowtail) is used as the second peak P2, as in the above embodiment.

Fig. 10(c) is a graph illustrating the number of second peaks P2 based on the reflection wave of the back acquired at each measurement date. Since the measuring time differs at each measurement date, the number of detections of the second peak P2 differs. The shortest measuring time was 3.5 hours on November 28, and the longest measuring time is 24 hours on August 1.

When the coefficients a and b of Expression (1) described above were calculated by the calculation of the regression line described above based on the data acquired by the measurement described above, the coefficient a was 2.93 and the coefficient b was 4.35. When the average weight W of the fish (yellowtail) of the measurement at each time is calculated based on Expression (1) by using the calculated values, an average value of a relative error of the weight W from the actual measurement was 5.8%. Particularly, excluding November 28 on which the sufficient amount of data could not be secured because of the short measuring time, the average value of the relative error was 4.5%. Therefore, the average weight of the fish (yellowtail) could be acquired by Expression (1) described above with a low relative error.

Next, when the coefficients a', b', and c' of Expression (19) described above were calculated by the multiple regression analysis described above based on the data acquired by the measurement described above, the coefficient a' was 1.38, the coefficient b' was 3.30, and the coefficient c' was 0.0146. When the average weight W of the fish (yellowtail) of the measurement at each time was calculated based on Expression (19) described above by using the calculated values, the average value of the relative error of the weight W to the actual measurement was 4.9%. Particularly, excluding November 28 on which the sufficient amount of data could not be secured because of the short measuring time, the average value of the relative error was 3.4%. As described above, by using Expression (19), the relative error of the average weight of the fish (yellowtail) could be reduced notably, and the relative error was significantly improved compared with the case using Expression (1). Therefore, effects of the processing according to the above embodiment were confirmed.

<Effects of Embodiment>

According to the above embodiment, the following effects may be obtained.

The data related to the weight of the target object (fish) is acquired based on the intensity difference between the first peak P1 and the second peak P2. As illustrated in Expression (15) described above, the intensity difference depends on the ratio of the body width D to the length Lb of the target object (fish). That is, the intensity difference may serve as the index indicative of the body fatness of the target object (fish). Therefore, the weight of the target object (fish) can be estimated more accurately by using the intensity difference between the first peak P1 and the second peak P2.

The target object measuring module 37 acquires the data related to the weight of the target object (fish) by further using the time difference between the first peak P1 and the second peak P2. In detail, the target object measuring module 37 calculates the height H of the target object (fish) based on the time difference between the first peak P1 and the second peak P2, and calculates the weight of the target object (fish) by applying the calculated height H and the intensity difference to Expression (19). Therefore, the data related to the weight of the target object (fish) can be acquired with sufficient accuracy.

Further, the target object measuring module 37 acquires the data related to the weight of the target object (fish) based on the histogram of the intensity difference and the time difference which are calculated for the plurality of echo signals. In more detail, the target object measuring module 37 acquires the representative values of the intensity difference and the time difference in the histogram, and acquires the average weight of the target object (fish) based on the acquired representative values. Thus, the average weight of the target object (fish) of which the relative error is reduced notably can be acquired, as illustrated in the verification example described above. Therefore, the data related to the average weight of the target object (fish) can be acquired with sufficient accuracy.

Note that, in order to acquire the data related to the weight of the target object (fish) with more sufficient accuracy, it is preferred to acquire the intensity difference and the time difference of the second peak P2 which appears at the timing earlier than the first peak P1 among the plurality of peaks included in the echo signal as described in the above embodiment to acquire the data related to the weight of the target object (fish).

That is, as in the above embodiment, when the transmission wave is transmitted downwardly, the peaks based on the secondary echo and the third echo from the swim bladder may appear in the range later than the timing of the first peak P1. For this reason, these peaks easily overlap with the peak based on the reflection wave from the belly etc., and it is difficult to accurately acquire the peak based on the reflection wave from the belly etc. as the second peak P2.

On the other hand, since the peaks based on the secondary echo and the third echo from the swim bladder does not exist in the range earlier than the timing of the first peak P1, the second peak P2 based on the reflection wave from the back etc. can be acquired with sufficient accuracy. Therefore, the data related to the weight of the target object (fish) can be acquired with more sufficient accuracy by using the intensity difference and the time difference which are acquired from the second peak P2 which appears earlier than the timing of the first peak P1.

Note that, as in the above embodiment, when the transmission wave is transmitted downwardly, the peak based on the reflection wave from the back is normally a peak which appears the earliest among the plurality of peaks included in the echo signal above the threshold Th1 of Fig. 3. For this reason, the peak which appears the earliest among the plurality of peaks may almost certainly be the peak based on the back of the target object (fish). Therefore, as in the above embodiment, the data related to the weight of the target object (fish) can be acquired with more sufficient accuracy by setting the peak which appears the earliest as the second peak P2 used for the acquisition processing of the fish weight.

In the above embodiment, the incoming directions of the first peak P1 and other peaks are calculated by the peak incoming direction calculating module 34, and other peaks of which the difference in the incoming direction from the incoming direction of the first peak P1 is smaller than the given threshold are set as the second peak P2. Thus, the first peak P1 and the second peak P2 from the same target object (fish) are used for the acquisition processing of the fish weight, and the peaks based on the echoes from other fish and the peaks based on sudden noises etc. are removed from the processing candidates. Therefore, the data related to the weight of the target object (fish) can be acquired with more sufficient accuracy.

Here, the peak incoming direction calculating module 34 calculates the incoming direction of each peak based on the difference of the timings (phase difference) at which the four reception channels of the transducer 10 receive the reflection wave. Therefore, based on the split beam method, the incoming direction of each peak can be calculated smoothly with sufficient accuracy.

<Modifications>

The present disclosure is not limited to the above embodiment. Moreover, the embodiment of the present disclosure may be modified variously, other than having the above configuration.

For example, at Step S18 of Fig. 9, the average weight W of fish may not be necessarily calculated. For example, at Step S18, the average body width D of the fish, or the ratio (D/Lb) of the average body width D to the length Lb may be calculated based on Expression (15) described above, as the data related to the size and/or the weight of the fish. The size and the body fatness of the target object (fish) can also be grasped by using these data. In this case, at Step S19, the calculated average body width D or the calculated ratio (D/Lb), and the height H of fish calculated based on the time difference are stored in the external memory 50. When calculating the average weight of the fish, for example, the external computer to which the external memory 50 is attached may calculate the weight based on these data. Also in this case, as in the above embodiment, the average weight of the fish can be acquired with sufficient accuracy.

Further, the processing at Step S18 may be performed by the external computer. In this case, Step S18 is omitted from the flowchart of Fig. 9. Moreover, at Step S19, the data group of the intensity difference and the time difference calculated at Steps S16 and S17 are stored in the external memory 50. Then, the external computer to which the external memory 50 is attached reads the data group from the external memory 50 and performs the same processing as Step S18. Therefore, the average weight of the fish is calculated. Also in this case, as in the above embodiment, the average weight W of the fish can be acquired with sufficient accuracy.

Further, the number of reception channels of the transducer 10 is not limited to four but may be five or more. Also in this case, the incoming direction of each peak can be calculated by the processing based on the split beam method.

Further, the number of reception channels of the transducer 10 may be two. In this case, the transducer 10 may be replaced by a known dual-beam transducer. The transducer 10 is provided with the transmitter 11, and the receiver 12 having the two reception channels. The transmitter 11 transmits the transmission wave underwater as in the above embodiment. The two reception channels of the receiver 12 are reception channels with mutually different directivities, and each receives the reflection wave reflected on the underwater target object. Then, the transducer 10 converts the data related to the received reflection wave into the electric signal.

When the dual-beam method is used, the peak incoming direction calculating module 34 obtains an angle formed between the incoming direction of the reflection wave and the direction of the center axis of the transmission wave based on a difference between the echo intensities received by the two reception channels. Thus, it can determine whether the first peak P1 and the second peak P2 are originated in the same fish.

In order to realize the two reception channels with different directivities, for example, two elements with different sizes may be disposed at the receiver 12 and the reception is made by each element to form the two reception channels. Without being limited to this configuration, for example, a single element may be used to perform the reception at two frequencies comprised of a low frequency and a high frequency to form the two reception channels. Note that the configuration of the transducer 10 may be altered suitably. For example, the element of the receiver 12 may be used as the transmitter 11, and the transmission and the reception may be performed by the same element.

Moreover, in the above embodiment, since the processing is performed by the echo signal converted into decibel (target strength), the intensity difference is acquired as the difference between the intensity of the first peak P1 and the intensity of the second peak P2, as illustrated in Fig. 3. However, when the processing is performed with a value before the decibel conversion is carried out (linear value), the intensity difference may be acquired as a ratio of the intensity of the first peak P1 to the intensity of the second peak P2. Also in this case, by applying the same processing as in the above embodiment using the intensity difference which is the ratio, the data related to the size and/or the weight of the target object (fish) may be acquired.

In addition, the signal processing unit 30 may generate a display data for displaying the data related to the size and the weight of the target object. In this case, the signal processing unit 30 may output the display data to a display unit connected to the signal processing unit 30.

Although in the above embodiment the data related to the weight of the target object is acquired based on the intensity difference and the time difference between the first peak P1 and the second peak P2, the data related to the size of the target object, such as the height H of the target object, and the ratio (D/Lb) of the body width D to the length Lb, may be acquired. The height H of the target object may be acquired based on the time difference between the first peak P1 and the second peak P2 as described with reference to Figs. 4(a) to 4(c). The height H of the target object and the ratio (D/Lb) of the body width D to the length Lb may be acquired by applying the intensity difference between the first peak P1 and the second peak P2 to Expression (15) described above. Alternatively, as for the data related to the size of the target object, the body width D of the target object may be acquired.

Although in the above embodiment the average weight of fish stored in the fish cage 2 is acquired by using the two-dimensional histogram having the two axes comprised of the intensity difference and the time difference, the data related to the weight and the size of the fish may be acquired for each fish based on the intensity difference and the time difference which are acquired for each fish.

Although in the above embodiment the transducer 10 is provided so as to be oriented vertically downward so that the transmission wave (ultrasonic wave) is transmitted downwardly underwater from the water surface side, the transducer 10 may be disposed at a bottom part of the net 5 and the transmission wave (ultrasonic wave) may be transmitted vertically upward toward the water surface thereabove. In this case, the second peak P2 based on the reflection wave from the back of the fish appears later than the first peak P1, and the second peak P2 based on the reflection wave from the belly appears earlier than the first peak P1. Also in this case, in order to avoid the influence of the secondary echo and the third echo from the swim bladder, it is preferred to use the second peak P2 based on the reflection wave from the belly which appears earlier than the first peak P1 as the second peak P2 for acquiring the size and/or the weight of the target object.

Although in the above embodiment the two-dimensional histogram having the two axes comprised of the intensity difference and the time difference is illustrated in Figs. 5 to 8 for convenience of explanation, such a two-dimensional histogram may not necessarily be generated, but processing similar to the processing described with reference to Figs. 5 to 8 may be performed by the data processing to the data group. For example, in the above embodiment, only a data group included in the extraction range (the range of the intensity difference and the range of the time difference) for acquiring the representative values of the intensity difference and the time difference may be extracted, the frequency distribution curve may be obtained by applying the processing of the kernel density estimation to the extracted data group for every intensity difference and time difference, and the intensity difference and the time difference which become the highest frequency in the obtained frequency distribution curve may be acquired as the representative values of the intensity difference and the time difference. Alternatively, the intensity difference and the time difference which become the maximum frequency of appearance may be obtained from the extracted data group for every intensity difference and time difference, and the obtained intensity difference and time difference may be acquired as the representative values of the intensity difference and the time difference.

Further, the histogram as a graph may not need to be generated, but the processing based on the histogram may be performed by data processing. The configurations of claims 4 and 5 do not limit that the histogram is generated as a graph, and include that the histogram-assumed processing is performed by the data processing.

Further, as described above, it is preferred that, in order to improve the resolution in the depth direction, the transducer 10 transmits the transmission wave (ultrasonic wave) by the pulse as short as possible. However, instead of using the short pulse, a pulse compression may be applied to the reception signal by using a pulse which changes frequency over time (so-called "chirp signal").

Further, the target object used as the candidate for the data acquisition is not limited to the fish cultured in a fish farm (for example, the fish cage 2). For example, the transducer 10 may be attached to a fishing boat, and the weight and the size may be measured for a school of fish of substantially the same size or weight swimming in the sea.

The embodiment of the present disclosure may be altered suitably within the scope of the appended claims.

DESCRIPTION OF REFERENCE CHARACTERS

1    Target Object Measuring Device
10   Transducer
32   Target Object Echo Signal Extracting Module
33   Peak Detecting Module
34   Peak Incoming Direction Calculating Module
35   Intensity Difference Calculating Module
36   Time Difference Calculating Module
37   Target Object Measuring Module

TERMINOLOGY

It is to be understood that not necessarily all objects or advantages may be achieved in accordance with any particular embodiment described herein. Thus, for example, those skilled in the art will recognize that certain embodiments may be configured to operate in a manner that achieves or optimizes one advantage or group of advantages as taught herein without necessarily achieving other objects or advantages as may be taught or suggested herein.

All of the processes described herein may be embodied in, and fully automated via, software code modules executed by a computing system that includes one or more computers or processors. The code modules may be stored in any type of non-transitory computer-readable medium or other computer storage device. Some or all the methods may be embodied in specialized computer hardware.

Many other variations than those described herein will be apparent from this disclosure. For example, depending on the embodiment, certain acts, events, or functions of any of the algorithms described herein can be performed in a different sequence, can be added, merged, or left out altogether (e.g., not all described acts or events are necessary for the practice of the algorithms). Moreover, in certain embodiments, acts or events can be performed concurrently, e.g., through multi-threaded processing, interrupt processing, or multiple processors or processor cores or on other parallel architectures, rather than sequentially. In addition, different tasks or processes can be performed by different machines and/or computing systems that can function together.

The various illustrative logical blocks and modules described in connection with the embodiments disclosed herein can be implemented or performed by a machine, such as a processor. A processor can be a microprocessor, but in the alternative, the processor can be a controller, microcontroller, or state machine, combinations of the same, or the like. A processor can include electrical circuitry configured to process computer-executable instructions. In another embodiment, a processor includes an application specific integrated circuit (ASIC), a field programmable gate array (FPGA) or other programmable device that performs logic operations without processing computer-executable instructions. A processor can also be implemented as a combination of computing devices, e.g., a combination of a digital signal processor (DSP) and a microprocessor, a plurality of microprocessors, one or more microprocessors in conjunction with a DSP core, or any other such configuration. Although described herein primarily with respect to digital technology, a processor may also include primarily analog components. For example, some or all of the signal processing algorithms described herein may be implemented in analog circuitry or mixed analog and digital circuitry. A computing environment can include any type of computer system, including, but not limited to, a computer system based on a microprocessor, a mainframe computer, a digital signal processor, a portable computing device, a device controller, or a computational engine within an appliance, to name a few.

Conditional language such as, among others, "can," "could," "might" or "may," unless specifically stated otherwise, are otherwise understood within the context as used in general to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Disjunctive language such as the phrase "at least one of X, Y, or Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

Any process descriptions, elements or blocks in the flow diagrams described herein and/or depicted in the attached figures should be understood as potentially representing modules, segments, or portions of code which include one or more executable instructions for implementing specific logical functions or elements in the process. Alternate implementations are included within the scope of the embodiments described herein in which elements or functions may be deleted, executed out of order from that shown, or discussed, including substantially concurrently or in reverse order, depending on the functionality involved as would be understood by those skilled in the art.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B and C" can include a first processor configured to carry out recitation A working in conjunction with a second processor configured to carry out recitations B and C. The same holds true for the use of definite articles used to introduce embodiment recitations. In addition, even if a specific number of an introduced embodiment recitation is explicitly recited, those skilled in the art will recognize that such recitation should typically be interpreted to mean at least the recited number (e.g., the bare recitation of "two recitations," without other modifiers, typically means at least two recitations, or two or more recitations).

It will be understood by those within the art that, in general, terms used herein, are generally intended as "open" terms (e.g., the term "including" should be interpreted as "including but not limited to," the term "having" should be interpreted as "having at least," the term "includes" should be interpreted as "includes but is not limited to," etc.).

For expository purposes, the term "horizontal" as used herein is defined as a plane parallel to the plane or surface of the floor of the area in which the system being described is used or the method being described is performed, regardless of its orientation. The term "floor" can be interchanged with the term "ground" or "water surface." The term "vertical" refers to a direction perpendicular to the horizontal as just defined. Terms such as "above," "below," "bottom," "top," "side," "higher," "lower," "upper," "over," and "under," are defined with respect to the horizontal plane.

As used herein, the terms "attached," "connected," "mated," and other such relational terms should be construed, unless otherwise noted, to include removable, moveable, fixed, adjustable, and/or releasable connections or attachments. The connections/attachments can include direct connections and/or connections having intermediate structure between the two components discussed.

Numbers preceded by a term such as "approximately," "about," and "substantially" as used herein include the recited numbers, and also represent an amount close to the stated amount that still performs a desired function or achieves a desired result. For example, the terms "approximately," "about," and "substantially" may refer to an amount that is within less than 10% of the stated amount. Features of embodiments disclosed herein preceded by a term such as "approximately," "about," and "substantially" as used herein represent the feature with some variability that still performs a desired function or achieves a desired result for that feature.

It should be emphasized that many variations and modifications may be made to the above-described embodiments, the elements of which are to be understood as being among other acceptable examples. All such modifications and variations are intended to be included herein within the scope of this disclosure and protected by the following claims.

**Claims**

1. A target object measuring device, comprising:

   a transducer configured to transmit a transmission wave underwater and receive a reflection wave of the transmission wave;
   a target object echo signal extracting module configured to extract an echo signal of a target object from a reception signal of the reflection wave;
   a peak detecting module configured to detect a plurality of peaks included in the echo signal;
   an intensity difference calculating module configured to calculate an intensity difference between an intensity of a first peak and an intensity of a second peak different from the first peak, among the plurality of peaks; and
   a target object measuring module configured to acquire data related to a size and/or a weight of the target object based on the intensity difference.

2. The target object measuring device of claim 1, wherein the intensity difference calculating module identifies a highest peak with the highest intensity among the plurality of peaks included in the echo signal, and calculates the intensity difference with the highest peak as the first peak.

3. The target object measuring device of claim 1 or 2, further comprising a time difference calculating module configured to calculate a time difference between timings at which the first peak and the second peak appear,
   wherein the target object measuring module acquires the data related to the size and/or the weight of the target object based on the time difference.

4. The target object measuring device of claim 3, wherein the target object measuring module acquires the data related to the size and/or the weight of the target object based on a histogram of the intensity difference and the time difference calculated for a plurality of echo signals.

5. The target object measuring device of claim 4, wherein the target object measuring module acquires representative values of the intensity difference and the time difference in the histogram, and acquires the data related to the size and/or the weight of the target object based on the representative values.

6. The target object measuring device of any one of claims 1 to 5, wherein the transducer transmits the transmission wave substantially downwardly, and
   wherein the second peak is a peak, among the plurality of peaks included in the echo signal, appearing earlier than a timing of the first peak.

7. The target object measuring device of any one of claims 1 to 6, further comprising a peak incoming direction calculating module configured to calculate based on the reflection wave an incoming direction of each of the plurality of peaks included in the echo signal,
   wherein the second peak is a peak, among the plurality of peaks, with a difference in the incoming direction from the first peak being smaller than a given threshold.

8. The target object measuring device of claim 7, wherein the transducer has four or more reception channels configured to receive the reflection wave, and
wherein the peak incoming direction calculating module calculates the incoming direction based on a difference between timings at which the reception channels receive the reflection wave.

9. The target object measuring device of claim 7, wherein the transducer has two reception channels configured to receive the reflection wave, and
wherein the peak incoming direction calculating module calculates the incoming direction based on an intensity difference of the reflection waves received by the reception channels.

10. The target object measuring device of any one of claims 1 to 9, wherein the target object is fish bred in a fish farm.

11. The target object measuring device of claim 10, wherein the transducer transmits the transmission wave substantially vertically, and
wherein the target object measuring module acquires a fish width as the data related to the size and/or the weight of the target object.

12. A method of measuring a target object, comprising:

transmitting a transmission wave underwater;
receiving a reflection wave of the transmission wave;
extracting an echo signal of the target object from a reception signal of the reflection wave;
detecting a plurality of peaks included in the echo signal;
calculating an intensity difference between an intensity of a first peak and an intensity of a second peak different from the first peak, among the plurality of peaks; and
acquiring data related to a size and/or a weight of the target object based on the intensity difference.

FIG. 1

FIG. 2

FIG. 3

FIG. 4

<TWO-DIMENSIONAL HISTOGRAM BASED ON ECHO SIGNAL OF YELLOWTAILS>

FIG. 5

EP 3 951 431 A1

FIG. 6

EP 3 951 431 A1

<TWO-DIMENSIONAL HISTOGRAM BASED ON ECHO SIGNAL OF RED SEA BREAMS>

FIG. 7

<TWO-DIMENSIONAL HISTOGRAM BASED ON ECHO SIGNAL OF RED SEA BREAMS>

FIG. 8

START

S11
TRANSMIT TRANSMISSION WAVE

S12
GENERATE RECEPTION SIGNAL

S13
EXTRACT ECHO SIGNAL OF FISH

S14
DETECT PEAKS

S15
CALCULATE INCOMING DIRECTION
OF EACH PEAK

S16
CALCULATE INTENSITY DIFFERENCE
BETWEEN 1ST AND 2ND PEAKS

S17
CALCULATE TIME DIFFERENCE
BETWEEN 1ST AND 2ND PEAKS

S18
CALCULATE DATA RELATED TO
SIZE AND/OR WEIGHT OF FISH

S19
STORE DATA

END

FIG. 9

FIG. 10

**INTERNATIONAL SEARCH REPORT**

| International application No. |
|---|
| PCT/JP2020/007590 |

**A. CLASSIFICATION OF SUBJECT MATTER**
G01S 15/96(2006.01)i
FI: G01S15/96

According to International Patent Classification (IPC) or to both national classification and IPC

**B. FIELDS SEARCHED**

Minimum documentation searched (classification system followed by classification symbols)
G01S15/00-15/96, G01S7/52-7/64, A01K61/00-61/65, A01K61/80-63/10

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-341028 A (NEC CORP.) 27.11.2002 (2002-11-27) paragraphs [0016]-[0045], fig. 1-4 | 1-2, 12 |
| Y | paragraphs [0016]-[0045], fig. 1-4 | 3, 10 |
| A | paragraphs [0016]-[0045], fig. 1-4 | 4-9, 11 |
| Y | JP 2008-267834 A (MATSUO, Yukio) 06.11.2008 (2008-11-06) paragraphs [0013]-[0053], fig. 1-10 | 3, 10 |
| A | paragraphs [0013]-[0053], fig. 1-10 | 1-2, 4-9, 11-12 |
| Y | WO 2017/163904 A1 (FURUNO ELECTRIC CO., LTD.) 28.09.2017 (2017-09-28) paragraphs [0013]-[0063], fig. 1-7 | 10 |
| A | paragraphs [0013]-[0063], fig. 1-7 | 1-9, 11-12 |
| A | JP 2011-52990 A (TOHOKU GAKUIN) 17.03.2011 (2011-03-17) paragraphs [0016]-[0071], fig. 1-11 | 1-12 |
| A | CN 106371100 A (SOUTH CHINA SEA FISHERIES RES) 01.02.2017 (2017-02-01) paragraphs [0018]-[0036], fig. 1-2 | 1-12 |

☐ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 May 2020 (18.05.2020) | 26 May 2020 (26.05.2020) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

INTERNATIONAL SEARCH REPORT

Information on patent family members

International application No.

PCT/JP2020/007590

| Patent Documents referred in the Report | Publication Date | Patent Family | Publication Date |
|---|---|---|---|
| JP 2002-341028 A | 27 Nov. 2002 | (Family: none) | |
| JP 2008-267834 A | 06 Nov. 2008 | (Family: none) | |
| WO 2017/163904 A1 | 28 Sep. 2017 | (Family: none) | |
| JP 2011-52990 A | 17 Mar. 2011 | (Family: none) | |
| CN 106371100 A | 01 Feb. 2017 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060018197 A1